Europäisches Patentamt

European Patent Office

Office européen des brevets

(19)

(11) Publication number: **0 219 293 B1**

## EUROPEAN PATENT SPECIFICATION

(12)

(45) Date of publication of patent specification: **18.12.91**  (51) Int. Cl.⁵: **B60P 1/16**

(21) Application number: **86307699.8**

(22) Date of filing: **06.10.86**

(54) Pneumatic control system for vehicles.

(30) Priority: **07.10.85 US 785209**

(43) Date of publication of application:
**22.04.87 Bulletin 87/17**

(45) Publication of the grant of the patent:
**18.12.91 Bulletin 91/51**

(84) Designated Contracting States:
**AT BE CH DE ES FR GB GR IT LI LU NL SE**

(56) References cited:
**EP-A- 0 125 926**
**DE-C- 448 692**
**GB-A- 827 913**
**US-A- 2 697 329**

(73) Proprietor: **Diesel Equipment Limited**
**139 Laird Drive**
**Toronto Ontario M4G 3V6(CA)**

(72) Inventor: **Martin, John C.**
**1 Annesley Avenue**
**Toronto Ontario, M4G 2T5(CA)**

(74) Representative: **Sheader, Brian N. et al**
**Eric Potter & Clarkson St. Mary's Court St.**
**Mary's Gate**
**Nottingham NG1 1LE(GB)**

## Description

The invention relates to pneumatic controls for a motor vehicle. In particular, this invention relates to improvements in the pneumatic controls for controlling the operation of a hydraulically-powered lift system of a dump truck or the like.

### Prior Art

In trucks such as dump trucks such as that described in EP-A-0 125 926 which has a hydraulic power system for raising and lowering the container body, pneumatic control system for controlling the operation of the hydraulic power system, two distinctly different types of controls are available.

When a compressed air system is provided for the purposes of operating the brakes of the vehicle, it is common practice to tap into this system to obtain a source of compressed air for use in operating a pneumatic control system for the hydraulic power system.

Air brakes have long been criticized as being unreliable because of leakage which can occur and the practice of tapping into the air brakes system to obtain a source of pneumatic power for operating the pneumatic control system further increases the likelihood of leakage.

A mechanical linkage system for controlling the operation of the hydraulic power system has also been available for many years. This mechanical linkage system permits the driver of the vehicle to directly manipulate the control valves which control the supply of hydraulic fluid. These devices are, however, expensive to install and difficult to maintain in good working order.

In practice, if an air brake system is being used on the vehicle, most dump trucks would employ a pneumatic control system for controlling the operation of the hydraulic power system by tapping into the air brake system. In circumstances where an air brake system is not available, the only alternative which has been proposed to date is the use of a mechanical linkage system.

The air compressors which are provided for the purposes of generating compressed air to operate a power brake system are large compressors driven directly from the engine of the vehicle. The air brake system employs a compressed air storage compartment which is charged by the compressor so as to provide a sufficient reservoir of compressed air to permit proper operation of the brakes.

The large compressors which are used in an air brake system are expensive pieces of equipment requiring expensive power take-off connections with the engine and for this reason, it is not considered to be economically practical to use such a compressor merely for the purposes of providing compressed air to operate neumatic controls of a dump truck or the like.

### Summary of Invention

It is an object of the present invention to provide a simple and inexpensive self-contained pneumatic system for regulating the operation of the hydraulic system of a motor vehicle.

It is a further object of the present invention to provide a self-contained pneumatic system for regulating the operation of the hydraulic system of a motor vehicle which is powered by the low oltage circuit of the motor vehicle.

It is yet another object of the present invention to provide a self-contained pneumatic system for controlling the operation of the hydraulic system of a dump truck or the like which is powered by a low voltage electric motor which is electrically connected to the low voltage circuit of the motor vehicle to drive a small compressor to pressurize the pneumatic system as required in use.

According to one aspect of the present invention, there is provided a motor vehicle such a truck having a battery operated low voltage electrical system, a hydraulically powered system for operating one or more high power hydraulic devices and a pneumatic system for regulating the operation of the hydraulic system, characterised by a low capacity compressor which is powered by a low voltage electric motor which is electrically connected to the low voltage circuit of the motor vehicle to drive the compressor to pressurize the pneumatic system as required in use.

According to a further aspect of the present invention, there is provided a motor vehicle of the type described above characterised by pressure sensing means in the pneumatic system for activating and deactivating the low voltage electric motor to maintain the pressure in the pneumatic system within predetermined limits.

These and other objects of the present invention will be more clearly understood after reference to the following detailed specification read in conjunction with the drawings wherein:

Figure 1 is a diagrammatic pictorial representation of a dump truck constructed in accordance with an embodiment of the present invention;

Figure 2 is diagrammatic representation of the hydraulic, pneumatic and low voltage electrical system according to an embodiment of the present invention;

Figure 3 is a diagram similar to a portion of Figure 2 illustrating a further embodiment of the present invention; and

Figure 4 is a pictorial illustration of a compressor and pneumatic control valve assembly constructed in accordance with an embodiment of the present invention.

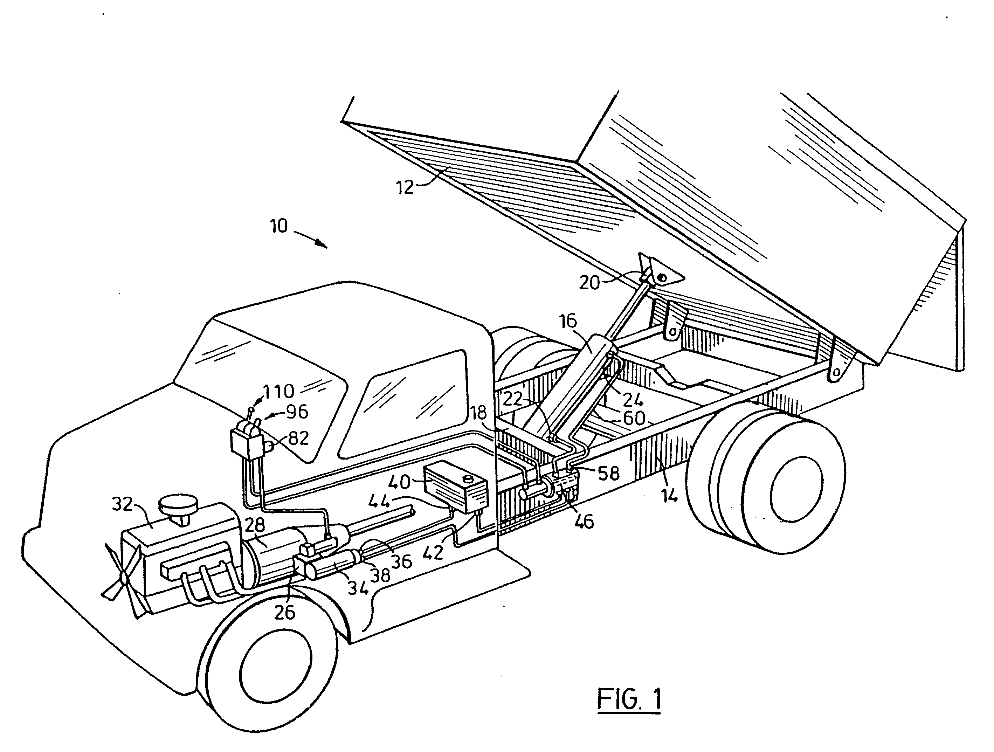

With reference to Figure 1 of the drawings, the reference numeral 10 refers generally to a dump truck which has a container body 12 mounted on a chassis 14. A double acting hydraulic lift cylinder 16 has one end 18 mounted on the chassis 14 and the other end 20 connected to the container body 12. The cylinder 16 has first and second hydraulic fluid connections 22 and 24, each of which serve to admit hydraulic fluid to and drain hydraulic fluid from the cylinder 16 such that when fluid is admitted through the first connection 22, the cylinder 16 will be extended and when fluid is admitted through the second connection 24, the cylinder will be contracted to effect raising and lowering of the container body as required in use.

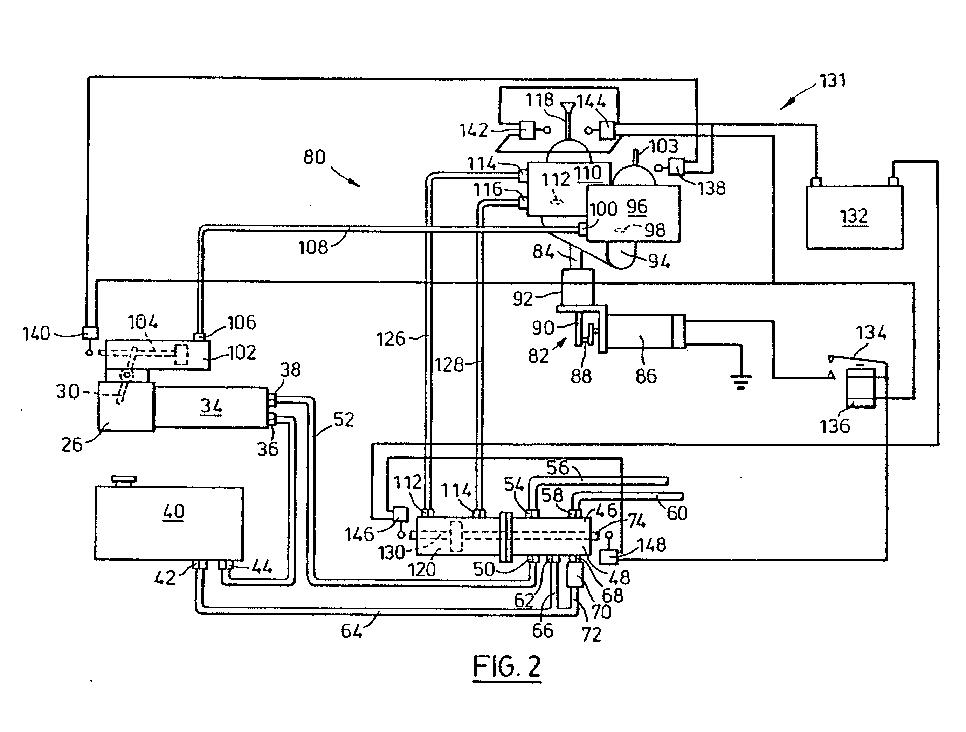

A power take-off 26 is mounted on the engine transmission housing 28 in a conventional manner and has an actuator arm 30 (Fig.2) which is moveable to engage and disengage the power take-off from the transmission 28 of the engine 32. An hydraulic pump 34 is connected to the power take-off 26 to be driven when the power take-off is activated. The hydraulic pump 34 has an input 36 and an output 38. An hydraulic fluid reservoir 40 has an input port 42 and an output port 44. The output port 44 is connected to the input 36 of the hydraulic pump 34.

A first control valve 46 is mounted on the chassis 14. The first control valve 46 serves to control the supply of hydraulic fluid to the lift cylinder 16.

As shown more clearly in Figure 2 of the drawings, the first control valve 46 has a valve body 48 which has a first hydraulic port 50 which is connected to the hydraulic pump output 38 by means of a conduit 52. The control valve 46 has a second hydraulic port 54 which is connected by means of a conduit 56 to the first hydraulic fluid connection 22 of the hydraulic lift cylinder 16. The first hydraulic fluid control valve 46 also has a third port 58 which is connected to the second connection 24 of the lift cylinder 16 by means of a conduit 60. A fourth port 62 is connected to the input 42 of the reservoir 40 by means of a branch 66 of a conduit 64. A fifth port 68 is connected through a flow restrictor 70 which is located in a branch 72 of the conduit 64 to the input port 42 of the reservoir 40. The flow restrictor 70 serves to limit the rate of flow of hydraulic fluid to the reservoir to limit the rate of lowering of the container body 12 in a conventional manner.

A valve member 74 is slidably mounted in the valve body 48 for movement between a first position in which the first port 50 communicates with the second port 52 to supply hydraulic fluid to the lift cylinder 16 and the third port 58 communicates with the fourth port 62 to drain hydraulic fluid from the lift cylinder into the reservoir and a second position in which the first port 50 communicates with the third port 58 to supply hydraulic fluid to contract the lift cylinder and the second port 54 is connected to the fifth port 68 to drain fluid from the lift cylinder to the reservoir through the flow restrictor 68.

The pneumatic control system is generally identified by the reference numeral 80 and comprises an air compressor 82 which has an air output 84. The compressor 82 is a small capacity air compressor such as that which is sold by Webster Mfg. (London) Limited of London, Ontario, Canada and identified by the trade mark MINI-AIR which is capable of providing up to 90 p.s.i.. The compressor 82 comprises a low voltage electric motor 86 which is an output crank shaft 88 connected to a connecting rod 90. A piston (not shown) is mounted at the other end of the connecting rod and reciprocates in cylinder 92. The air output 84 of the compressor 82 is connected to a manifold 94. A first pneumatic control valve 96 is provided for controlling the operation of the power take-off 26. The first pneumatic control valve 96 has an air input 98 and an air output 100. The air input 98 communicates with the manifold 94. A manually operable valve member 102 is moveable between a closed position preventing the passage of air and an open position permitting the passage of air through the first pneumatic control valve from the input 98 to the output 100. A first pneumatic actuator 102 is provided for controlling the movement of the actuator arm 30 the power take-off in response to movement of the first pneumatic control valve 96. The first pneumatic actuator has an actuator member 104 slidably mounted therein between a first position in which it causes the actuator arm 30 to disengage the power take-off 26 from the engine and a second position in which it engages the power take-off with the engine. The first pneumatic actuator has an air input port 106 connected to the air output 100 of the first pneumatic control valve 96 such that when air is supplied to the first pneumatic actuator 102, when the first control valve 96 is in its opened position, the actuator member 104 is moved to its second position engaging the power take-off. The actuator member 104 is normally biased towards its first position so as to disengage the power take-off when the first pneumatic actuator 102 is returned to its first position which permits venting of the first pneumatic actuator 102 through conduit 108.

A second pneumatic control valve 110 is provided for the purposes of controlling the operation of the first hydraulic fluid control valve 46. The second pneumatic control valve 110 has an air input 112 communicating with the manifold 94 and first and second air outputs 114 and 116. A valve member 118 is mounted for movement in the second control valve 110 between a neutral position preventing the passage of air from the air input 112 to either of the air outputs 114 or 116 and a first open position to permit the passage of air from the air manifold 94 to the first output 114 and a second open position to permit the passage of air from the manifold 94 to the second air output 116.

A second pneumatic actuator 120 is a double acting actuator having first and second air ports 112 and 114 which communicate with the first and second air outputs 114 and 116 by means of conduits 126 and 128 respectively. A second actuator member 130 is drivingly connected to the valve member 74 of the first hydraulic fluid control valve 46 and serves to move the valve member 74 to its first position in response to movement of the second pneumatic control 110 to its first open position and move the valve members 74 to its second position in response to movement of the second pneumatic control 110 to its second open position. From the foregoing, it will be seen that the pneumatic control system is a self-contained system in which the source of compressed air is the air compressor 82. The compressed air is directed to the first pneumatic actuator 102 through the first pneumatic control valve 96 and the compressed air is directed to the second pneumatic control actuator 120 through the second pneumatic control valve 110.

A low voltage electrical circuit generally identified by the reference numeral 131 is provided for powering the compressor 82 and controlling the operation of the compressor 82. The power source is a battery 132 which is the normal operating battery of the motor vehicle which is usually a 12 volt battery. A normally open circuit breaker 134 is powered by a relay 136 which, when activated, closes the circuit breaker 134 to power the compressor 82. A normally open first switch 138 is associated with the first pneumatic control valve 96 and a normally closed second switch 140 is associated with the first pneumatic actuator 102 to control the operation of the compressor 82 in response to the requirements for control of the operation of the power take-off 26.

In use when it is necessary to activate the power take-off 126, the first pneumatic control lever 103 is moved from its first position to its second position to close the first switch 138 and thereby activate the relay 136 to close the circuit breaker 134 to supply power to the compressor 82. The compressed air is transmitted from the compressor 82 through the conduit 108 to the air input 106 and to the first actuator 102. The compressed air entering the actuator 102 displaces the actuator member 104 to its second position causing the actuator arm 30 to engage the power take-off 26 with the engine thereby to power the pump 34. When the actuator member 104 is located in its second position, it will engage the normally closed second switch 140 which will open to interrupt the supply of power to the relay 136 thereby permitting the circuit breaker 134 to return to its open position to stop the compressor. The compressor will remain inactive until the pneumatic pressure at the first actuator 102 drops below that required to maintain the actuator member 104 in the position retaining the power take-off in operation. When the pneumatic pressure at the first actuator 102 drops below that required to maintain the actuator member 104 in its second position, the second switch 140 will again close and this will reactivate the relay 136 to close the circuit breaker 134 to reactivate the compressor 82.

To control the operation of the second pneumatic actuator 120, normally open third and fourth switches 142 and 144 are arranged in series/parallel and associated with the second pneumatic control valve 110 so as to be operably engaged by the valve actuator 118 such that movement of the second pneumatic control valve from the neutral position illustrated in Figure 2 to one or other of its first or second positions, will close one of the third or fourth switches 142, 144 to activate the relay 136 to close the circuit breaker 135 to activate the compressor to supply air under pressure to the second pneumatic actuator 102. Normally closed fifth and sixth switches 146 and 148 are associated with the second pneumatic actuator 120 and are arranged in series with the relay 136 whereby when the pneumatic pressure applied to the second pneumatic actuator 120 is equal to that required to maintain the first hydraulic control valve 46 in the position dictated by the second pneumatic control valve 110, one or other of the fifth or sixth switches will be opened to deactivate the relay 136 to stop the compressor and when the pressure applied to the second pneumatic control valve 120 drops below that required to maintain the first hydraulic control valve the required position, both the fifth and sixth switches will be closed to activate the compressor when the relay 136 is activated to close the circuit breaker 134.

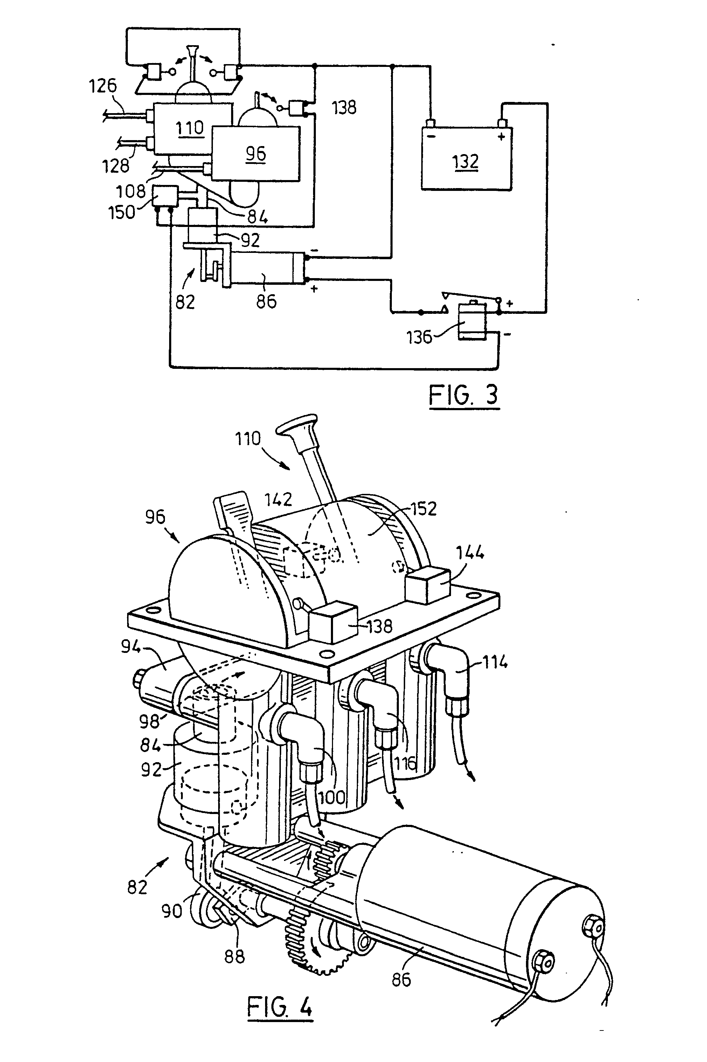

Various modifications of the low voltage electrical circuit are possible while maintaining the required operational control of the hydraulic circuit and one such modification is illustrated in Figure 3 of the drawings wherein like numerals are applied to like parts to those of Figure 2. In this embodiment it is possible to operate the hydraulic system without requiring the normally closed second switch 140 and the normally closed fifth and sixth switches 146 and 148. In the embodiment illustrated in Figure 3 of the drawing, a pressure sensing switch 150 communicates with the air output 84 from the cylinder 92 of the compressor 82. The pressure sensing switch 150 is wired in series with the normally open first switch 138 and the relay 136. The pressure sensing switch 150 will close to activate the relay when the air pressure in the output 84 drops below a predetermined minimum and will open when the pressure exceeds a predetermined maximum. Typical operating pressures for the pneumatic system of the present invention are a minimum of 90 psi and a maximum of 100 psi with the result that the pressure sensing switches 50 may be designed to operate within these limits so as to open when the pressure exceeds 100 psi and close when the pressure drops below 90 psi.

The first pneumatic control valve 96 and the second pneumatic control valve 110 may be combined in a unitary housing 150 as illustrated in Figure 4 of the drawings and may be in the form of a pneumatic valve such as that described in United States Patent Application Serial No. 06/569,654 filed January 10, 1984 and will not therefore be described in detail.

From the foregoing, it will be apparent that the pneumatic control system of the present invention is a self-contained system which is powered by an independent compressor which is in turn powered by the low voltage electrical circuit of the vehicle. It follows that this pneumatic control system can be utilized to control the operation of an hydraulic power system of a vehicle which does not have a pneumatic break system. Furthermore the self-contained pneumatic control system of the present invention is so inexpensive as to be used in preference to tapping into the air lines of a pneumatic break system even when such a pneumatic break system is available thereby to eliminate the safety drawbacks of tapping into the pneumatic circuit of air breaks.

These and other advantages of the system of the present invention will be apparent to those skilled in the art.

## Claims

1. A motor vehicle such as a truck having a battery operated low voltage electrical system, a hydraulically powered system for operating one or more high power hydraulic devices and a pneumatic system for regulating the operation of the hydraulic system, characterised by a low capacity compressor (82) which is powered by a low voltage electric motor (86) which is electrically connected to the low voltage circuit (131) of the motor vehicle (10) to drive the compressor (82) to pressurize the pneumatic system (80) as required in use.

2. A motor vehicle as claimed in claim 1, further characterised by pressure sensing means (150) in the pneumatic system (80) for activating and deactivating the low voltage electric motor (86) to maintain the pressure in the pneumatic system (80) within predetermined limits.

3. A motor vehicle as claimed in claim 2, further characterised by circuit breaker means (136) in the low voltage electrical system (131) communicating with the pressure sensing means (150) to activate and deactivate the electric motor (86).

4. A motor vehicle as claimed in claim 1, in which the vehicle is in the form of a dump truck (10) wherein the hydraulic powered system includes an extensible lift cylinder (16) for raising and lowering the container body (12) and a lift control valve (46) which is movable between first and second positions to control the supply of hydraulic fluid to the lift cylinder (16) to extend or contract it, and wherein the pneumatic control system (80) includes a pneumatic lift actuator (120) which is operable to move the lift control valve (46) between its first and second positions, characterised by circuit breaker means (136) in the low voltage electrical circuit for activating and deactivating said electrical motor (86) to control the operation of the compressor (82) and lift control valve sensor means (142, 144) for determining the position of the lift control valve (46) to open and close the circuit breaker (136) as required in use.

5. A motor vehicle as claimed in claim 4, characterised by two switches (146, 148) which are arranged in series with the operating circuit of the circuit breaker (136) and associated with the lift actuator (46) such that when the pneumatic pressure applied to the pneumatic lift actuator (46) is equal to that required to maintain the lift control valve (74) in its required position, one or other of the switches (146, 148) will be opened to open the circuit breaker (136) to stops the compressor (82) and when the pressure applied to the pneumatic lift actuator (46) drops below that required to maintain the lift control valve (74) in its required position, both of said switches (146, 148) will be closed to close the circuit breaker (136) to reactivate the compressor (82).

6. A motor vehicle as claimed in claim 4, further characterised by a first branch of the low voltage electrical circuit leading from the battery to a normally opened first switch (138) associated with the first pneumatic control valve (96) and a normally closed second switch (140) associated with the first pneumatic actuator (102) and communicating with said circuit breaker (136) such that when the first control valve (96) is moved to its second position, said normally opened first switch (138) is closed and electrical power is supplied to the circuit breaker (136) to close it to supply power to the compressor (82) until the pneumatic pressure displaces the pneumatic actuator (102) beyond its second position to open said normally closed second switch (140) to deactivate said circuit breaker (136) to deactivate the compressor (82) to permit the first pneumatic actuator (102) to return to its operative position to again close said second switch (140) to close the circuit breaker (136) and reactivate the compressor (82).

7. A motor vehicle as claimed in claim 6, further characterised by a second branch line in the electrical circuit having normally opened third and fourth switches (142, 144) arranged in series/parallel and associated with said second pneumatic control valve (110) such that the movement of the,second control valve (110) from its neutral position to one or other of its first or second positions will close one of said third or fourth switches (142, 144) to close the circuit breaker (136) to activate said compressor (82) to supply air under pressure to said second pneumatic actuator (120) and to move it toward its first or second position.

8. A motor vehicle as claimed in claim 7, further characterised by normally closed fifth and sixth switches (146, 148) associated with said second pneumatic actuator (120) and arranged in series with said circuit breaker (136) whereby the pneumatic pressure applied to the second pneumatic actuator (120) is equal to that required to maintain the lift control valve (46) in the position dictated by the second pneumatic control valve (110), one or other of said fifth or sixth switches (146, 148) being opened to open the circuit breaker (136) to stop the compressor (82) and when the pressure applied to the second pneumatic actuator (120) drops below that required to maintain the lift control valve (46) in the required position, both the fifth and sixth switches (146, 148) will be closed to close the circuit breaker (136) to reactivate the compressor (82).

**Revendications**

1. Véhicule automobile tel qu'un camion comportant un système électrique à basse tension alimenté par batterie, un système hydraulique pour faire fonctionner un ou plusieurs dispositifs hydrauliques de forte puissance et un système pneumatique pour la régulation du fonctionnement du système hydraulique, caractérisé par un compresseur de faible capacité (82) qui est mû par un moteur électrique à basse tension (86) connecté électriquement au circuit à basse tension (131) du véhicule automobile (10) pour entraîner le compresseur (82) afin de pressuriser le système pneumatique (80) comme requis en service.

2. Véhicule automobile suivant la revendication 1, caractérisé, en outre, par un détecteur de pression (150) dans le système pneumatique (80) destiné à activer et à désactiver le moteur électrique à basse tension (86) en vue de maintenir la pression dans le système pneumatique (80) entre des limites prédéterminées.

3. Véhicule automobile suivant la revendication 2, caractérisé, en outre, par un disjoncteur (136) dans le système électrique à basse tension (131) communiquant avec le détecteur de pression (150) pour activer et désactiver le moteur électrique (86).

4. Véhicule automobile suivant la revendication 1, qui a la forme d'un camion-benne (10) dans lequel le système hydraulique comprend un vérin de levage extensible (16) pour élever et abaisser la benne (12) et une valve de commande de levage (46) qui est mobile entre une première et une seconde position pour commander l'alimentation de fluide hydraulique au vérin de levage (16) en vue de l'étendre ou de le rétracter, et dans lequel le système de commande pneumatique (80) comprend un actionneur de levage pneumatique (120) qui peut intervenir pour déplacer la valve de commande de levage (46) entre sa première et sa seconde position, caractérisé par un disjoncteur (136) dans le circuit électrique à basse tension pour activer et désactiver le moteur électrique (86) afin de commander le fonctionnement du compresseur (82) et des détecteurs de valve de commande de levage (142, 144) pour déterminer la position de la valve de commande de levage (46) afin d'ouvrir et de fermer le disjoncteur (136) comme requis en service.

5. Véhicule automobile suivant la revendication 4, caractérisé par deux commutateurs (146, 148) qui sont disposés en série avec le circuit d'actionnement du disjoncteur (136) et associés à l'actionneur de levage pneumatique (46), de telle sorte que, lorsque la pression pneumatique appliquée à l'actionneur de levage pneumatique (46) est égale à celle requise pour maintenir la valve de commande de levage (74) dans sa position requise, l'un ou l'autre des commutateurs (146, 148) sera ouvert pour ouvrir le disjoncteur (136) afin d'arrêter le compresseur (82) et que, lorsque la pression appliquée à l'actionneur de levage pneumatique (46) tombe en dessous de celle requise pour maintenir la valve de commande de levage (74) dans la position requise, les deux commutateurs (146, 148) seront fermés pour fermer le disjoncteur (136) afin de réactiver le compresseur (82).

6. Véhicule automobile suivant la revendication 4, caractérisé, en outre, par un premier branchement du circuit électrique à basse tension allant de la batterie à un premier commutateur normalement ouvert (138) associé à la première valve de commande pneumatique (96) et à un second commutateur normalement fermé (140) associé au premier actionneur pneumatique (102) et communiquant avec le disjoncteur (136), de telle sorte que, lorsque la première valve de commande (96) est amenée dans sa seconde position, le premier commutateur normalement ouvert (138) est fermé et du courant électrique est fourni au disjoncteur (136) pour le fermer en vue de fournir du courant au compresseur (82) jusqu'à ce que la pression pneumatique déplace l'actionneur pneumatique (102) au-delà de sa seconde position pour ouvrir le second commutateur normalement fermé (140) afin de désactiver le disjoncteur (136) et ainsi le compresseur (82) pour permettre au premier actionneur pneumatique (102) de revenir dans sa position active afin de refermer le second commutateur (140) pour fermer le disjoncteur (136) et réactiver le compresseur (82).

7. Véhicule automobile suivant la revendication 6, caractérisé, en outre, par une seconde conduite de branchement dans le circuit électrique comportant un troisième et un quatrième commutateur normalement ouverts (142, 144) disposés en série/parallèle et associés à la seconde valve de commande pneumatique (110), de telle façon que le déplacement de la seconde valve de commande (110) depuis sa position neutre vers l'une ou l'autre de sa première ou de sa seconde position provoque la fermeture de l'un des troisième et quatrième commutateurs (142, 144) pour fermer le disjoncteur (136) afin d'activer le compresseur (82) pour fournir de l'air sous pression au second actionneur pneumatique (120) et le déplacer vers sa première ou sa seconde position.

8. Véhicule automobile suivant la revendication 7, caractérisé, en outre, par un cinquième et un sixième commutateur normalement fermés (146, 148) associés au second actionneur pneumatique (120) et disposés en série avec le disjoncteur (136), de sorte que la pression pneumatique appliquée au second actionneur pneumatique (120) est égale à celle requise pour maintenir la valve de commande de levage (46) dans la position imposée par la seconde valve de commande pneumatique (110), l'un ou l'autre des cinquième et sixième commutateurs (146, 148) étant ouvert pour ouvrir le disjoncteur (136) afin d'arrêter le compresseur (82) et, lorsque la pression appliquée au second actionneur pneumatique (120) descend en dessous de celle requise pour maintenir la valve de commande de levage (46) dans la position requise, le cinquième et le sixième commutateur (146, 148) se ferment pour provoquer la fermeture du disjoncteur (136) afin de réactiver le compresseur (82).

**Patentansprüche**

1. Kraftfahrzeug wie beispielsweise ein Lastwagen mit einem batteriebetriebenen elektrischen Niederspannungssystem, einem hydraulisch angetriebenen System zur Betätigung von einer oder mehreren hydraulischen Hochleistungsvorrichtungen und einem pneumatischen System zum Regeln des Betriebes des hydraulischen Systems, gekennzeichnet durch einen Kompressor (82) mit niedriger Kapazität, der durch einen Niederspannungs-Elektromotor (86) angetrieben wird, der elektrisch mit der Niederspannungsschaltung (131) des Kraftfahrzeuges (10) zum Antreiben des Kompressors (82) zur anwendungsmäßigen Druckbeaufschlagung des pneumatischen Systems (80) verbunden ist.

2. Kraftfahrzeug nach Anspruch 1, weiterhin gekennzeichnet durch Druckfühlmittel (150) im pneumatischen System (80) zum Aktivieren und Desaktivieren des Niederspannungs-Elektromotors (86), um den Druck im pneumatischen System (80) innerhalb von vorbestimmten Grenzen zu halten.

3. Kraftfahrzeug nach Anspruch 2, weiterhin gekennzeichnet durch Leistungsschaltermittel (136) im elektrischen Niederspannungssystem (131), die zur Aktivierung und Desaktivierung des Elektromotors (86) mit dem Druckfühlmittel (150) in Verbindung stehen.

4. Kraftfahrzeug nach Anspruch 1, wobei das Fahrzeug in der Form eines Kippfahrzeugs (10) ist, wobei das hydraulisch betriebene System einen ausfahrbaren Hebezylinder (16) zum Anheben und Herablassen des Behälterkörpers (12) und ein Hebesteuerventil (46) enthält, das zum Steuern des Zuflusses von hydraulischer Flüssigkeit zum Hebezylinder (16) zu seinem Herausziehen oder Zusammenziehen zwischen ersten und zweiten Positionen bewegbar ist, und wobei das pneumatische Steuersystem (80) ein pneumatisches Hebebetätigungsglied (120) enthält, das zum Bewegen des Hebesteuerventils (46) zwischen seinen ersten und zweiten Positionen betätigt werden kann, gekennzeichnet durch Leistungsschaltermittel (136) in der elektrischen Niederspannungsschaltung zum Aktivieren und Desaktivieren des besagten Elektromotors (86) zum Steuern des Betriebes des Kompressors (82) und Hebesteuerventilfühlmittel (142, 144) zum Bestimmen der Position des Hebesteuerventils (46) zum anwendungsmäßigen Öffnen und Schließen des Leistungsschalters (136).

5. Kraftfahrzeug nach Anspruch 4, gekennzeichnet durch zwei Schalter (146, 148), die in Reihe mit der Betriebsschaltung des Leistungsschalters (136) angeordnet und dem Hebebetätigungsglied (46) so zugeordnet sind, daß, wenn der an das pneumatische Hebebetätigungsglied (46) angelegte Luftdruck dem zum Halten des Hebesteuerventils (74) in seiner gewünschten Lage erforderlichen gleich ist, einer oder der andere der Schalter (146, 148) zum Öffnen des Leistungschalters (136) zum Anhalten des Kompressors (82) geöffnet wird, und wenn der an das pneumatische Hebebetätigungsglied (46) angelegte Druck unter den zum Halten des Hebesteuerventils (74) in seiner gewünschten Lage erforderlichen fällt, beide besagte Schalter (146, 148) zum Schließen des Leistungsschalters (136) zum Neuaktivieren des Kompressors (82) geschlossen werden.

6. Kraftfahrzeug nach Anspruch 4, weiterhin gekennzeichnet dadurch, daß ein erster Zweig der elektrischen Niederspannungsschaltung von der Batterie zu einem, dem ersten pneumatischen Steuerventil (96) zugeordneten ersten Schließer (138) und einem, dem ersten pneumatischen Betätigungsglied (102) zugeordneten zweiten Öffner (140) führt und mit dem besagten Leistungsschalter (136) so in Verbindung steht, daß wenn das erste Steuerventil (96) in seine zweite Lage bewegt wird, der besagte erste Schließer (138) geschlossen wird und der Leistungsschalter (136) mit elektrischem Strom versorgt wird, um ihn zu schließen, um den Kompressor (82) mit Strom zu versorgen, bis der Luftdruck das pneumatische Betätigungsglied (102) über seine zweite Position hinaus verlagert, um den besagten zweiten Öffner (140) zum Desaktivieren des besagten Leistungsschalters (136) zu öffnen, um den Kompressor (82) zu desaktivieren, damit das erste pneumatische Betätigungsglied (102) in seine Betriebsposition zurückkehren kann, um den besagten zweiten Schalter (140) wieder zu schließen, um den Leistungsschalter (136) zu schließen und den Kompressor (82) neu zu aktivieren.

7. Kraftfahrzeug nach Anspruch 6, weiterhin dadurch gekennzeichnet, daß eine zweite Zweigleitung in der elektrischen Schaltung dritte und vierte, in Reihe/parallel angeordnete und dem besagten zweiten pneumatischen Steuerventil (110) zugeordnete Schließer (142, 144) besitzt, sodaß die Bewegung des zweiten Steuerventils (110) aus seiner neutralen Lage in eine oder die andere seiner ersten oder zweiten Lagen einen der besagten dritten oder vierten Schalter (142, 144) schließen wird, um den Leistungsschalter (136) zu schließen, um den besagten Kompressor (82) zu betätigen, daß er Luft unter Druck dem besagten zweiten pneumatischen Betätigungsglied (120) zuführt und es auf seine erste oder zweite Lage zu bewegt.

8. Kraftfahrzeug nach Anspruch 7, weiterhin gekennzeichnet durch mit dem besagten zweiten pneumatischen Betätigungsglied (120) verbundene und in Reihe mit dem besagten Leistungsschalter (136) angeordnete fünfte und sechste Öffner (146, 148), wobei der an das zweite pneumatische Betätigungsglied (120) angelegte Luftdruck dem gleich ist, der zum Halten des Hebesteuerventils (46) in der vom zweiten pneumatischen Steuerventil (110) diktierten Lage erforderlich ist, wobei einer oder der andere der besagten fünften oder sechsten Schalter (146, 148) zum Öffnen des Leistungsschalters (136) geöffnet wird, um den Kompressor (82) anzuhalten und, wenn der an das zweite pneumatische Betätigungsglied (120) angelegte Druck unter den zum Halten des Hebesteuerventils (46) in der gewünschten Lage erforderlichen abfällt, sowohl der fünfte und sechste Schalter (146, 148) zum Schließen des Leistungsschalters (136) geschlossen werden, um den Kompressor (82) neu zu aktivieren.

FIG. 1

FIG. 2

EP 0 219 293 B1

FIG. 3

FIG. 4